# DEMANDE DE BREVET EUROPEEN

(11) **EP 2 947 373 A1**
(43) Date de publication de la demande: **25.11.2015**
(21) Numéro de dépôt: 15168537.7
(22) Date de dépôt: 20.05.2015
(51) Int. Cl.: F21S 2/00, F21V 8/00

(54) **MODULE D'ÉCLAIRAGE À FENÊTRE D'ÉCLAIRAGE ÉTENDUE ET ENSEMBLE DE TELS MODULES D'ÉCLAIRAGE ALIGNÉS**

(30) Priorité: 20.05.2014 FR 1454484
(71) Demandeur: Novaday International, 2074 Marin (CH)
(72) Inventeur: Fourot, Jérome, 38440 Saint-Jean de Bournay (FR)
(74) Mandataire: Le Cacheux, Samuel L.R.

(57) **Abrégé**

L'invention concerne un module d'éclairage comprenant un caisson (1) qui se présente avec deux faces latérales (2,3), deux faces transversales (4,5), une face avant (6) et une face arrière (7) et qui renferme au moins une série de sources ponctuelles de lumière (13) situées le long d'une face latérale (2) du caisson ainsi que des moyens (15) de diffusion de la lumière issue des sources ponctuelles (13) vers une fenêtre d'éclairage (16) située en face avant du caisson et de forme générale rectangulaire, caractérisée en ce qu'il comprend au moins un guide de lumière latéral (20) qui ferme en partie au moins une face latérale (5) du caisson, qui forme un bord transversal de la fenêtre d'éclairage (16) et qui comprend, dans l'alignement de la fenêtre d'éclairage (16), une fenêtre avant (21) de passage de la lumière située en face avant du caisson et une fenêtre latérale (22) de passage de la lumière située en face latérale du caisson et adjacente à fenêtre avant (21). L'invention concerne aussi un ensemble formé de ces modules alignés et juxtaposés.

## Description

La présente invention concerne le domaine technique de l'éclairage au moyen de rampes lumineuses. Dans une application préférée mais non limitative l'invention se rapporte au domaine des dispositifs ou modules d'éclairage utilisés à l'intérieur de bâtiments.

Dans le domaine ci-dessus, il est connu d'utiliser des modules d'éclairage qui comprennent un caisson de forme générale rectangulaire comprenant cinq faces métalliques opaques et une face avant ouverte formant une fenêtre d'éclairage. Chaque module d'éclairage comprend à l'intérieur du caisson des sources de lumière telles que des tubes fluorescents associés à des réflecteurs ainsi qu'éventuellement à des moyens de diffusion de lumière. Il est également connu de mettre en oeuvre des modules d'éclairage dans lesquels les sources de lumière sont formées par des diodes électroluminescentes constituant alors des sources de lumière ponctuelles associées à des moyens des diffusions de la lumière vers la fenêtre d'éclairage.

De tels modules d'éclairage permettent de réaliser un éclairage à partir du plafond dans des bâtiments mais présentent l'inconvénient de ne pas permettre la réalisation de lignes continues d'éclairage.

L'invention vise à remédier à cet inconvénient en proposant un module d'éclairage comprenant un caisson qui présente avec deux faces latérales, deux faces transversales, une face avant et une face arrière et qui renferme au moins une série de sources ponctuelles de lumière situées le long d'une face latérale du caisson ainsi que des moyens de diffusion de la lumière issue des sources ponctuelles vers une fenêtre d'éclairage située en face avant du caisson et de forme générale rectangulaire. Ce module d'éclairage est caractérisé en ce qu'il comprend au moins un guide de lumière latéral qui ferme en partie au moins une face latérale du caisson et forme un bord transversal de la fenêtre d'éclairage et qui comprend, dans l'alignement de la fenêtre d'éclairage, une fenêtre avant de passage de la lumière située en face avant du caisson et une fenêtre latérale de passage de la lumière située en face latérale du caisson et adjacente à la fenêtre avant.

Un tel module d'éclairage permet lorsqu'il est associé avec un autre module d'éclairage du même type de réaliser une ligne continue d'éclairage. En effet, lorsque les guides de lumière latéraux sont placés l'un contre l'autre et les fenêtres d'éclairages des modules étant alignées, la lumière se trouve bien diffusée y compris à l'interface des modules de sorte qu'il n'y a pas de discontinuité d'éclairage trop importante. La présence sur chaque guide de lumière d'une fenêtre latérale permet, avantageusement, le passage de la lumière provenant du module adjacent ce qui contribue à uniformiser de la diffusion de lumière.

L'invention vise également un ensemble de modules selon l'invention, alignés et juxtaposés caractérisé en que les faces latérales de deux modules adjacents sont formées par des guides de lumière.

Selon une caractéristique de l'invention, chaque module comprend deux guides de lumière fermant chacun en partie au moins une face latérale du caisson et formant chacun un côté transversal de la fenêtre d'éclairage. Une telle caractéristique permet de réaliser un ensemble d'éclairage comprenant au moins trois modules et formant une ligne d'éclairage continue.

Selon une autre caractéristique de l'invention, la fenêtre latérale de chaque guide de lumière s'étend sur une partie seulement de la face latérale correspondante dont l'autre partie est opaque. Une telle caractéristique permet d'associer le guide de lumière à un élément de renfort métallique assurant la rigidité du module d'éclairage correspondant. Ainsi selon une caractéristique de l'invention, chaque guide de lumière latéral comprend un renfort métallique.

Selon une autre caractéristique de l'invention, la fenêtre latérale de chaque guide de lumière s'étend sur la majeure partie de la face latérale correspondante. Cette caractéristique de l'invention permet d'optimiser la récupération de la lumière issue du module d'éclarage adjacent de manière à atténuer au maximum l'effet de bordure à la frontière de deux modules d'éclairage.

Selon encore une autre caractéristique de l'invention, chaque guide de lumière comprend une surface de réflexion située à distance de la fenêtre avant et inclinée vers l'intérieur du caisson. Cette caractéristique de l'invention vise à compenser l'atténuation de la lumière, induite par le guide latéral, de manière à réduire autant que faire se peut la perception de celui-ci par un observateur situé sous le module d'éclairage conforme à l'invention et à distance de ce dernier.

Selon une variante de cette caractéristique, la surface de réflexion est associée à un revêtement réfléchissant. La mise en oeuvre d'un tel revêtement réfléchissant permet d'augmenter la quantité de lumière réfléchie par ladite surface de réflexion.

Selon une caractéristique de l'invention, chaque guide de lumière comprend un retour s'étendant en partie en avant des moyens de diffusion de la lumière. Une telle caractéristique permet, d'une part, d'assurer un maintien mécanique des moyens de diffusion de lumière par le guide de lumière latéral et, d'autre part, d'optimiser l'uniformité de la diffusion de la lumière entre une région centrale de la fenêtre éclairage et la région formée par ledit guide de lumière latéral.

Selon une autre caractéristique de l'invention, chaque guide de lumière latéral comprend des micro-prismes. La mise en oeuvre de tels micro-prismes permet d'assurer un traitement de la diffusion de la lumière de manière à homogénéiser cette dernière.

Selon encore une autre caractéristique de l'invention, les parois latérales du caisson sont formées par deux profilés qui s'étendent sur toute la longueur de la paroi correspondante et qui sont liés en face arrière du caisson par des entretoises.

Selon l'invention, les sources lumineuses peuvent être de toute nature appropriée. Toutefois, dans une forme préférée mais non exclusive de réalisation visant à offrir un module d'éclairage aussi efficace que possible avec une consommation électrique réduite, les sources lumineuses sont des diodes électroluminescentes.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation de modules d'éclairage conformes à l'invention.
- La figure 1 est une perspective schématique d'un module d'éclairage selon l'invention vu depuis sa face avant.
- La figure 2 est une perspective schématique du module d'éclairage illustré à la figure 1 vu depuis sa face arrière.
- La figure 3 est une coupe schématique du module d'éclairage selon le plan III-III de la figure 2.
- La figure 4 est une perspective schématique montrant une ligne d'éclairage formé par la juxtaposition de plusieurs modules d'éclairage selon l'invention.
- La figure 5 est une coupe partielle schématique du module d'éclairage selon le plan V-V de la figure 2.
- La figure 6 est une coupe partielle schématique analogue à la figure 5 montrant deux modules d'éclairage selon l'invention juxtaposés.
- Les figures 7 à 9 sont des coupes partielles analogues à la figure 5 montrant des variantes de réalisation d'un module d'éclairage selon l'invention.
Il est à noter que sur ces figures les éléments structurels et/ou fonctionnels communs aux différentes variantes peuvent présenter les mêmes références.

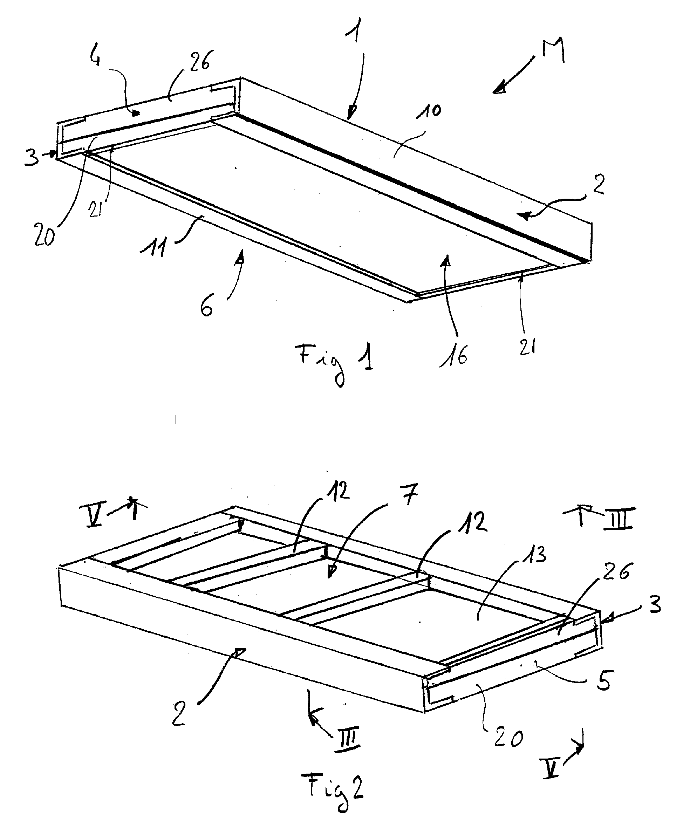

Un module d'éclairage l'invention, tel qu'illustré aux figures 1 et 2 en étant désigné dans son ensemble par la référence M, comprend un caisson 1 qui présente deux faces latérales 2 et 3 , deux faces transversales 4 et 5, une face avant 6 visible à la figure 1 et une face arrière 7 visible à la figure 2. Selon l'exemple illustré, le caisson 1 possède la forme générale d'un parallélépipède aplati dont les deux plus grandes faces sont les faces avant 6 et arrière 7.

Dans le cas présent le caisson 1 est formé de deux profilés 10 et 11 qui s'étendent sur toute la longueur des faces latérales 2 et 3 du caisson 1 et qui sont liés, en face arrière 7, par des entretoises 12.

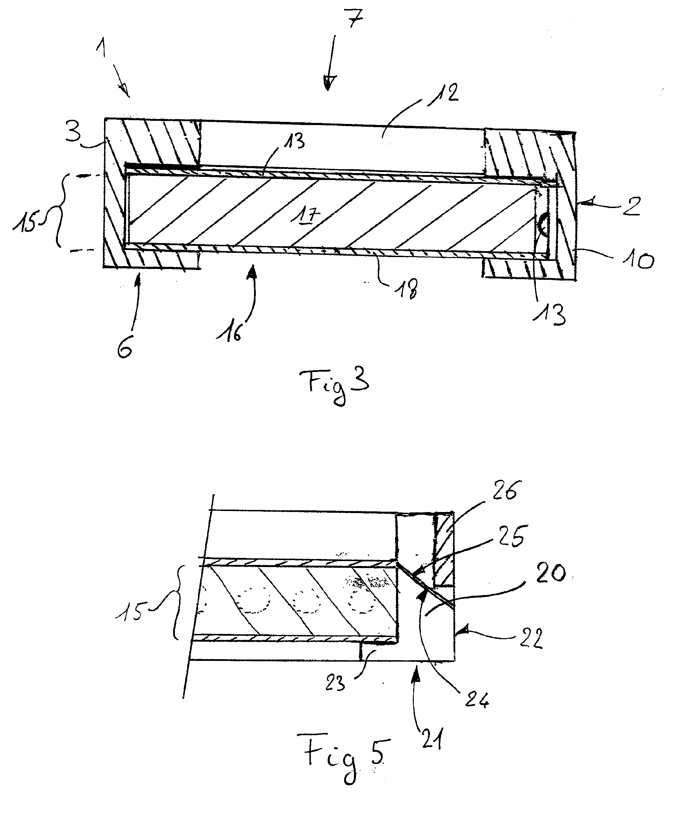

Le caisson 1 définit une sorte de boîte à lumière fermée vers la face arrière par une plaque métallique 13 dont la face orientée vers l'avant est réfléchissante. Selon l'exemple illustré, le caisson 1 renferme une série de sources ponctuelles de lumière 13 situées le long d'une face latérale, dans le cas présent et comme le montre la figure 3, le long de la face latérale 2 dans une gorge en C ouverte vers l'intérieur caisson et formée par le profilé 10. Les sources de lumière ponctuelle 13 sont de préférence formées par des diodes électroluminescentes portées par un support de circuit imprimé dit PCB pour en anglais Printed Circuit Board.

Le caisson 1 renferme également des moyens 15 de diffusion de la lumière issue des sources ponctuelles 13 vers une fenêtre d'éclairage 16 située au niveau de la face avant 6 du caisson 1. Les moyens de diffusion 15 comprennent par exemple une plaque micro-structurée 17 d'un polymère transparent et en face avant une plaque 18 d'un polymère translucide de couleur blanche. Bien entendu, les moyens de diffusion 15 pourraient être réalisés de toute autre manière dans la mesure où ils permettent de diffuser vers la fenêtre d'éclairage 16 la lumière issue des sources ponctuelles 13 qui sont réparties de manière régulière le long de la face latérale 2.

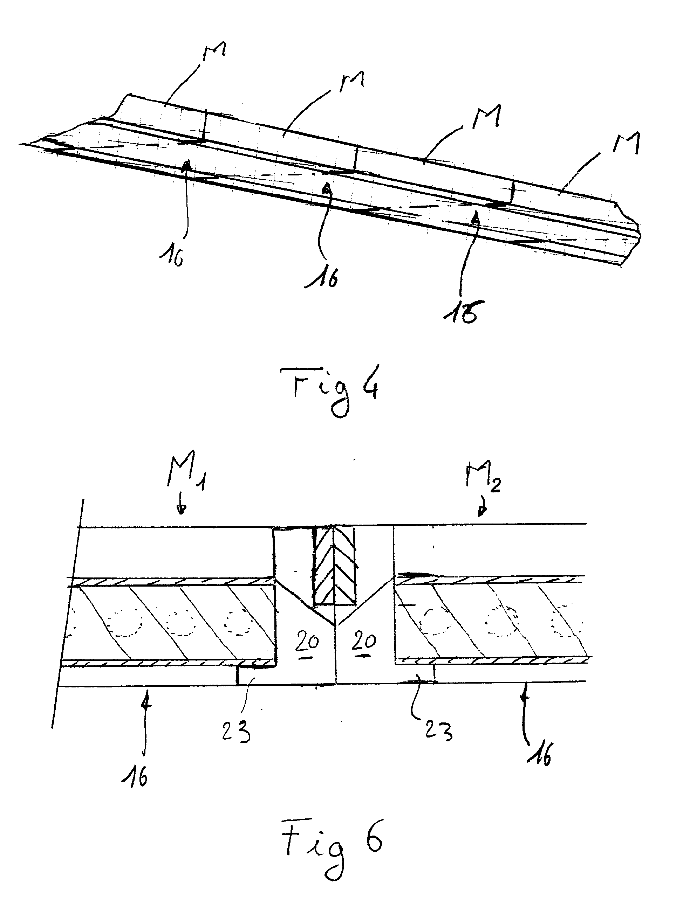

Le caisson 1 ainsi constitué permet d'obtenir un éclairage homogène sur toute la surface de la fenêtre d'éclairage 16. L'invention, vise à conserver autant que faire se peut cette homogénéité sur la surface d'éclairage formé par la juxtaposition de plusieurs modules M dont les fenêtres d'éclairage 16 sont alignées et adjacentes comme le montre la figure 4.

À cet effet, l'invention propose de fermer au moins l'une, et de préférence, les deux faces transversales 4, 5 du caisson M par un guide de lumière latéral 20. Comme cela ressort de la figure 5, chaque guide de lumière latéral 20 comprend une fenêtre avant 21 de passage de la lumière située dans l'alignement de la fenêtre d'éclairage 16 et donc en face avant du caisson 1. Le guide de lumière latéral 20 comprend également une fenêtre latérale 22 de passage de la lumière située en face latérale du caisson 1. Les fenêtres avant 21 et latérale 22 du guide de lumière latéral 20 sont adjacentes de sorte que le guide de lumière latéral 20 forme un bord transversal ainsi qu'une arrête transversale de la fenêtre d'éclairage 16.

Selon l'exemple illustré, le guide de lumière 20 comprend un retour 23 qui s'étend en avant des moyens de diffusion de lumière 15 de manière à réduire l'effet de frontière au niveau de l'interruption de ces derniers. Toujours selon l'exemple illustré le guide de lumière 20 comprend en outre une surface de réflexion 25 qui est située à distance de la fenêtre avant 21 et inclinée vers l'intérieur du caisson et plus particulièrement vers les moyens de diffusion 15 de manière à réfléchir les rayons lumineux en provenance de ces derniers vers la fenêtre de passage 21. Afin d'accentuer l'efficacité de cette réflexion, la surface de réflexion 24 est, de préférence mais non nécessairement, associée à un revêtement réfléchissant 25 tel que par exemple un dépôt d'aluminium.

Toujours selon l'exemple illustré, chaque guide de lumière latéral 20 comprend un renfort métallique 26 de sorte que la fenêtre latérale 22 s'étend sur une partie seulement du guide de lumière latéral 20, l'autre partie du guide étant opaque.

Chaque guide de lumière latéral 20 est réalisé dans un matériau translucide ou transparent, tel que par exemple un polymère ou une matière plastique comme du PMMA optique. Chaque guide de lumière latéral peut aussi être réalisé en verre.

Lorsque deux modules d'éclairage M1 et M2, conformes à l'invention, sont juxtaposés, comme le montre la figure 6, de manière à placer leurs guides de lumière latéraux 20 en contact, ces derniers assurent une diffusion de la lumière au niveau de l'interface entre les deux modules M1 et M2 de sorte que les fenêtres d'éclairage 16 définissent une ligne d'éclairage sensiblement continue voire homogène. En effet, les fenêtres latérales 22 de chaque guide de lumière 20 permettent à la lumière en provenance d'un module d'éclairage de se diffuser par la fenêtre d'éclairage du module adjacent. A cet égard, il doit être considéré que chaque guide de lumière latéral 20 fait partie intégrante de la fenêtre d'éclairage qu'il contribue à délimiter.

Les guides de lumière latéraux 20 d'un module éclairage selon l'invention ne sont pas nécessairement réalisés comme décrit précédemment.

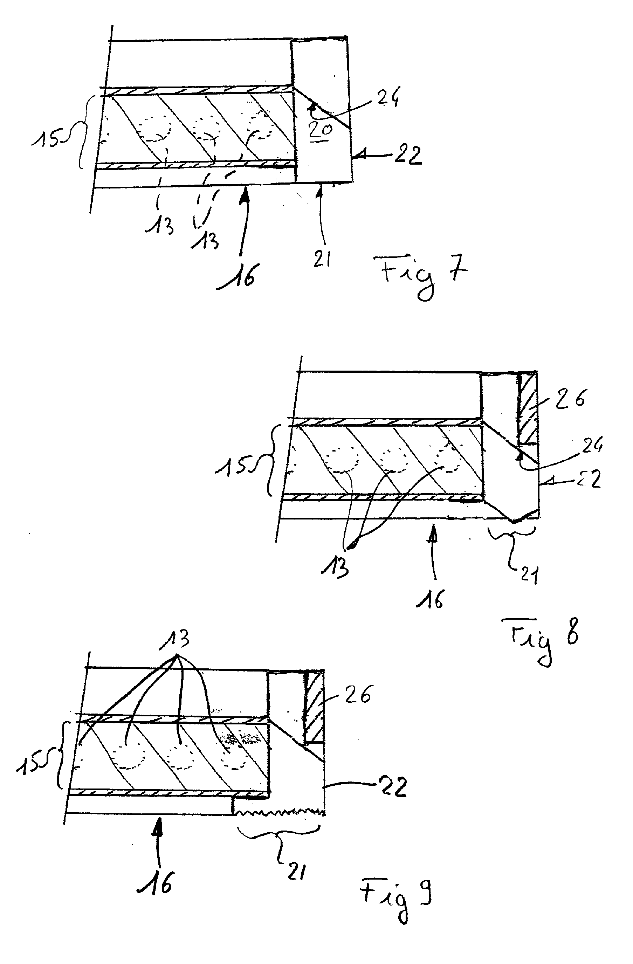

Ainsi la figure 7 montre une variante de réalisation de l'invention, selon laquelle d'un guide de lumière latéral 20 ne comprend pas de renfort métallique ni de retour s'étendant en avant des moyens de diffusion 15.

La figure 8 montre une autre variante de réalisation de l'invention selon laquelle la face avant du guide de lumière latéral 20 possède deux pans inclinés définissant un prisme de diffusion de la lumière.

La figure 9 illustre une autre variante de réalisation de l'invention selon laquelle la face avant 21 du guide de lumière latéral 20 est texturée de manière à former des micros prismes.

Par ailleurs, selon les exemples décrits précédemment, le module d'éclairage selon l'invention comprend des sources de lumières ponctuelles au niveau de la paroi intérieure d'une seule de ses faces latérales. Toutefois, un module d'éclairage selon l'invention pourrait comprendre des sources de lumières ponctuelles au niveau de la paroi intérieure de ses deux faces latérales.
Bien entendu, diverses autres modifications peuvent être apportées à un module d'éclairage selon l'invention dans le cadre des revendications annexées.

## Revendications

1. Module d'éclairage comprenant un caisson (1) qui présente avec deux faces latérales (2,3), deux faces transversales (4,5), une face avant (6) et une face arrière (7) et qui renferme au moins une série de sources ponctuelles de lumière (13) situées le long d'une face latérale (2) du caisson ainsi que des moyens (15) de diffusion de la lumière issue des sources ponctuelles (13) vers une fenêtre d'éclairage (16) située en face avant du caisson et de forme générale rectangulaire, **caractérisée en ce qu'**il comprend au moins un guide de lumière latéral (20) qui ferme en partie au moins une face latérale (5) du caisson, qui forme un bord transversal de la fenêtre d'éclairage (16) et qui comprend, dans l'alignement de la fenêtre d'éclairage (16), une fenêtre avant (21) de passage de la lumière située en face avant du caisson et une fenêtre latérale (22) de passage de la lumière située en face latérale du caisson et adjacente à fenêtre avant (21).

2. Module d'éclairage selon la revendication 1, **caractérisé en ce qu'**il comprend deux guides de lumière (22) fermant chacun en partie au moins une face latérale (4,5) du caisson et formant chacun un côté transversal de la fenêtre d'éclairage (16).

3. Module d'éclairage selon l'une des revendications précédentes, caractérisé en en ce que la fenêtre latérale (22) de chaque guide de lumière (20) s'étend sur une partie seulement de la face latérale correspondante dont l'autre partie est opaque.

4. Module d'éclairage selon l'une des revendications précédentes, **caractérisé en ce que** chaque guide de lumière (20) comprend une surface de réflexion (24) située à distance de la fenêtre avant (21) et inclinée vers l'intérieur du caisson.

5. Module d'éclairage selon la revendication précédente, **caractérisé en ce que** la surface de réflexion (24) est associée à un revêtement réfléchissant.

6. Module d'éclairage selon l'une des revendications précédentes, **caractérisé en ce que** chaque guide de lumière (20) comprend un retour (23) s'étendant en partie en avant des moyens de diffusion de la lumière (15).

7. Module d'éclairage selon l'une des revendications précédentes, **caractérisé en ce que** chaque guide de lumière (20) latéral comprend un renfort métallique (26).

8. Module d'éclairage selon l'une des revendications précédentes, **caractérisé en ce que** chaque guide de lumière (20) latéral comprend des micro-prismes.

9. Module d'éclairage selon l'une des revendications précédentes, **caractérisé en ce que** les parois latérales du caisson sont formées par deux profilés (10,11) qui s'étendent sur toute la longueur de la paroi correspondante (2,3) et qui sont liés en face arrière du caisson par des entretoises (12).

10. Module d'éclairage selon l'une des revendications précédentes, **caractérisé en ce que** les sources lumineuses (13) sont des diodes électroluminescentes.

11. Ensemble de modules selon l'une des revendications précédentes, alignés et juxtaposés caractérisé en que les faces latérales de deux modules adjacents (M1,M2) sont formées par des guides de lumière (20).
